# FASCICULE DE BREVET EUROPEEN

(11) **EP 1 449 901 B1**
(45) Date de publication et mention de la délivrance du brevet: **25.07.2007**
(21) Numéro de dépôt: 03075485.7
(22) Date de dépôt: 19.02.2003
(51) Int. Cl.: C09J 195/00, E04D 11/02

(54) **Procédé d'application par collage d'un élément isolant**
Verfahren zum Auftragen durch Verkleben eines Isolierelements
Method of bonding an insulating element

(43) Date de publication de la demande: 25.08.2004
(73) Titulaire: IMPERBEL S.A., 1651 Beersel (LOT) (BE)
(72) Inventeur: Getlichermann, Michel, Performance Roof Systems SA, 1360 Perwez (BE); Cogneau, Patrick, Performance Roof Systems SA, 1360 Perwez (BE)
(74) Mandataire: Quintelier, Claude

(56) Documents cités:
- FR-A- 2 178 355
- US-A- 4 783 942
- US-A- 5 253 461

## Description

La présente invention concerne un procédé d'application par collage d'un élément isolant dans un système d'étanchéité.

Il est généralement connu d'utiliser des éléments isolants dans un système d'étanchéité. Ce dernier système est en règle générale rendu étanche par l'application en couche finale d'une membrane d'étanchéité bitumineuse ou synthétique. L'élément isolant est soit collé sur une membrane existante, soit sur un support et ensuite recouvert d'une nouvelle membrane. Pour l'application du procédé connu on utilise en général une colle à base de solvant exempte d'eau ou une colle durcissante bi ou mono-composant. La présence d'eau est normalement néfaste dans des systèmes d'étanchéité.

Le désavantage du procédé connu utilisant de la colle à base de solvant organique est que la prise de la colle est assez lente et nécessite une longue période de séchage après l'application.

L'invention a pour but de réaliser un procédé d'application par collage d'un élément isolant où le temps de prise est plus court tout en utilisant une colle où l'eau remplace les composés organiques volatils.

A cette fin le procédé suivant l'invention est caractérisé en ce qu'au moins l'élément isolant ou le support sur lequel il est appliqué soit poreux, le panneau étant collé à l'aide d'un adhésif à base d'une émulsion bitumineuse ayant un taux d'eau de maximum 35 % et contenant un bitume dont la pénétration se situe entre 20 et 300 dixième de millimètre (dmm). L'usage d'un adhésif comprenant une émulsion bitumineuse avec un taux d'eau de maximum 35 % permet de garantir une prise rapide puisqu'une des constituants du système d'étanchéité est poreux. L'eau, qui est écologique, possède une diffusion rapide permettant de réaliser des temps de prise relativement courts. Puisqu'au moins l'élément isolant ou le support comporte une matière poreuse à l'eau, cette dernière pourra s'échapper par cette matière poreuse. Etant entendu que l'eau peut s'échapper, elle ne formera pas un obstacle à l'adhésion des différentes couches entre-elles et donc au système d'étanchéité.

Il faut noter que le brevet US 2.506.339 divulgue un adhésif comprenant une émulsion bitumineuse et ayant un taux d'eau. Toutefois, ce brevet ne divulgue pas l'usage de cet adhésif dans un procédé d'application par collage d'un élément isolant dans un système d'étanchéité. De plus, il n'y a pas de taux maximum mentionné pour l'eau car c'est l'eau qui détermine la viscosité de l'adhésif dans la colle décrite dans ce brevet. A la lecture de ce document, l'homme du métier n'obtient donc aucun enseignement quant à l'usage d'un adhésif à base d'une émulsion bitumineuse pour coller des éléments isolants dans un système d'étanchéité, ni à limiter le taux d'eau. Au contraire l'homme du métier est incité à ajouter de l'eau pour gérer la viscosité de l'adhésif.

Une première forme de réalisation préférentielle d'un procédé suivant l'invention est caractérisée en ce que l'adhésif utilisé comporte un agent gélifiant soluble en phase aqueuse. L'agent gélifiant agit comme régulateur de la viscosité. Le fait qu'il soit soluble en phase aqueuse permet un bon mélange avec l'eau présente dans l'émulsion bitumineuse utilisée.

De préférence l'émulsion utilisée est de type anionique. Ceci assure une meilleure stabilité de l'émulsion dans le temps.

Une deuxième forme de réalisation préférentielle d'un procédé suivant l'invention est caractérisée en ce que l'adhésif utilisé comporte en poids humide entre 40 et 70 % de bitume, entre 10 et 30 kg/tonne d'émulsifiant, entre 0 et 2 % en épaississant et entre 0 et 20 % en charge minérale. Ceci permet de réaliser un adhésif répondant aux critères de performance.

Une troisième forme de réalisation préférentielle d'un procédé suivant l'invention est caractérisée en ce que l'adhésif comporte des polymères, soit sous forme latex dans la phase aqueuse soit dans la phase bitume.

L'adhésif peut s'appliquer par plot, par trait ou en adhérence totale. C'est le système d'étanchéité qui définira la meilleure façon d'appliquer la colle.

L'invention sera maintenant décrite plus en détails à l'aide de la description donnée ci-dessous à titre d'exemple.

L'élément isolant à appliquer dans le système d'étanchéité, comme par exemple une toiture, est de préférence formé par un panneau ou par une membrane. Le panneau isolant peut être un panneau poreux comprenant de la laine minérale et possédant une porosité à l'air et à l'eau. La porosité, définie par la valeur p, est de préférence située entre 1,1 et 1,3. Suivant une autre forme de réalisation, le panneau isolant comporte de la perlite expansée (µ environ de 5). Le panneau peut également être non absorbant ou non poreux, par exemple comprenant du polyuréthane, du polyisocyanurate, ou du polystyrène expansé surfacé d'un voile de verre bitumé ou non. Le panneau peut également être recouvert d'une feuille d'aluminium.

Lorsque l'élément d'étanchéité est formé par une membrane d'étanchéité, cette membrane est de préférence une membrane bitumineuse qui le cas échéant forme la toiture existante. Si la membrane forme l'élément isolant à coller, le support sur lequel le collage est effectué doit nécessairement être poreux pour permettre l'évacuation de l'eau comme il sera décrit ci-dessous.

Le panneau isolant peut être collé sur différents supports comme par exemple du béton, des briques, du bois, un bac en acier ou autre structure métallique, une toiture recouverte d'une membrane bitumineuse. Si le support est absorbant, comme dans l'exemple du béton, le panneau peut être de type poreux ou non poreux. Par contre, si le support est non absorbant, comme dans l'exemple du bac ou de la membrane, le panneau doit être poreux au moins au niveau de la zone de contact avec l'adhésif.

L'adhésif utilisé pour appliquer l'élément isolant est un adhésif à base d'une émulsion bitumineuse ayant un taux d'eau de maximum 35 %. Autrement dit, le poids sec de l'émulsion se situe entre 40 et 85 % avec une préférence de 60 à 70 %. L'adhésif doit également avoir un taux de pénétration situé entre 20 et 300 dmm (dixième de millimètre), de préférence entre 70 et 100 dmm, afin de pouvoir convenablement adhérer à l'élément isolant.

L'adhésif comporte de préférence un agent gélifiant soluble en phase aqueuse, pour ainsi bien se mélanger avec l'émulsion bitumineuse formant la base de l'adhésif. En tant qu'agent gélifiant des argiles, de préférence des argiles naturelles de type bentonites, sépiolites ou ayant des fonctions organiques chimiquement modifiées, peuvent être utilisées. Ces argiles sont non seulement un agent gélifiant mais également une charge minérale. Les argiles peuvent également augmenter la stabilité au stockage et agissent comme régulateur de la viscosité de l'adhésif. La quantité d'agent gélifiant utilisée comporte entre 0 et 10 % et de préférence entre 2 et 5 % du poids. D'autres charges minérales peuvent faire partie de l'adhésif à utiliser. Celles-ci sont par exemple formées par de la poudre d'ardoise. La quantité utilisée est par exemple située entre 0 et 25 % du poids. Il est également possible d'utiliser des fibres cellulosiques ou des fibres de polyéthylène en tant que charge. Ces derniers forment par exemple 0 à 5 % du poids. En général la charge totale dans l'adhésif est située entre 0 et 20 % du poids de l'adhésif.

L'adhésif comporte également entre 10 et 30 kg/tonne d'émulsifiant, par exemple formé de sels d'ammonium quaternaire, entre 0 et 2 % d'épaississant , par exemple formé d'hydroxyéthyl ou propyl cellulose ou de bentonite, 40 à 70 % du poids de l'adhésif est formé par du bitume.

L'émulsion bitumineuse est de préférence du type anionique ou non ionique, ce qui assure une meilleure stabilité de l'émulsion dans le temps. En effet, des émulsions de type anionique ou non ionique permettent une bonne interaction avec la charge ou l'agent gélifiant et favorisent la stabilité de l'adhésif. Toutefois, des émulsions de type cationique peuvent également être utilisées mais leur stabilisation est plus difficile.

L'adhésif peut également comporter des polymères de type élastomérique comme par exemple du SBR.

La viscosité de l'adhésif peut être régulée en faisant varier son pourcentage en eau et son pourcentage en agent gélifiant. Ainsi, par exemple pour une application en plein, la viscosité doit se situer entre 5 à 50 Pa.s, ce qui permet l'application à la raclette ou par pulvérisation. Pour une application par traits, la viscosité se situera entre 50 à 400 Pa.s et supérieure à 400 Pa.s si on l'applique par plots. L'ajout de 1,5 % de fibres cellulosique permet de passer de 5 Pa s à une valeur de 60 Pa s. La viscosité est mesurée à 20° C à une vitesse de cisaillement de 5 sec⁻¹.

Lorsque des panneaux doivent être collés sur un support non uniformément plat, comme par exemple un bac acier, l'adhésif sera de préférence appliqué sur le support par traits ayant un poids de 100 à 300 g/ml et de préférence 150 à 200 g/ml (gramme/mètre linéaire) avec une quantité appliquée de 1 à 2,5 kg/m², de préférence 1,5 kg/m². Dans cet exemple par onde de la structure au minimum un double trait d'adhésif est appliqué. Lorsque l'adhésif est appliqué par plots, 1,5 kg/m² est appliqué. L'adhésif peut également être appliqué par pulvérisation en particulier lorsque toute la surface du support doit être enduite.

Pour l'application de membranes bitumineuses l'adhésif est appliqué par traits ou en plein et par quantité de 1,5 kg/m².

L'adhésif a une prise rapide, notamment endéans les 24 heures et au maximum après 72 heures après application pour une température de 20° C, 70 à 80 % de la résistance maximale de l'adhérence est atteint. La résistance maximale est obtenue après environ une semaine à une température de 20° C.

Puisque l'adhésif comporte de l'eau en tant que solvant il est très écologique. Malgré le fait que l'élément isolant est utilisé dans un système d'étanchéité, l'eau présente dans l'adhésif ne forme pas un problème. Puisque un des éléments, soit l'élément isolant, soit le support, ou même les deux sont absorbants pour l'eau, celle-ci peut diffuser dans le système par l'élément qui absorbe l'eau ou qui est poreux à l'eau. La vitesse de prise sera d'autant plus rapide que la capacité de diffusion des éléments assemblés est importante.

Même si l'usage d'une émulsion bitumineuse dans un système d'étanchéité est à priori une hérésie, les résultats d'essais effectués ont prouvé le contraire. En effet, dans un système d'étanchéité où au moins une des deux parties à mettre en contact est poreuse, une importante performance de l'adhésion dans un temps réduit par rapport à des solvants organiques a été constatée. Des tests au caisson au vent (WIND UPLIFT TEST, ETAG 006 March 2000) ont donné des résultats suivants :

### Exemple:

Maquette d'arrachement au vent - Comparatif colle émulsion - colle solvant (a)
Bac acier - isolant laine minérale fixé mécaniquement-Colle émulsion-Membrane d'étanchéité

| | |
|---|---|
| Après 1 mois d'application : 6500 Pa | (3500 Pa) ^{(a)} |
| Après 4 mois d'application : 6000 Pa | (6500 Pa) ^{(a)} |

| | |
|---|---|
| (a) : même système d'étanchéité mais avec la colle avec solvant organique. | |

Même si les performances sont bonnes, l'objectif est d'avoir le moins d'eau possible dans le système. En effet, l'adhésion sera d'autant plus rapide que le % d'eau est faible. Cette adhésion a été validée avec un % en eau dans l'adhésif de maximum 35%.

L'adhésif peut s'appliquer par trait, par plot ou en adhérence totale en fonction du système toiture. La différence dans le mode d'application est liée à la rhéologie de l'adhésif qui est modifiée non pas par l'ajout d'eau mais par le type d'additif.
Exemple 1 : effet thixotrope par ajout de bentonite ou smectite organiquement modifié. Ce type d'additif sera utilisé majoritairement pour les colles utilisables en trait ou en plot.
Exemple 2 : effet newtonien par ajout d'attapulgite. Ce type d'additif sera utilisé majoritairement pour les colles utilisables en adhérence totale sur un support.

Pour une plus grande polyvalence dans la période d'utilisation, notamment en hiver, il est possible d'additiver la phase aqueuse d'un anti-gel.

Pour augmenter la vitesse d'évaporation de l'eau emprisonnée dans le système, il est possible d'additiver la phase aqueuse de solvant créant un azéotrope minimum, c'est-à-dire que le point d'ébullition de l'adhésif est plus faible que 100° C.

## Revendications

1. Procédé d'application par collage d'un élément isolant dans un système d'étanchéité, **caractérisé en ce qu'**au moins l'élément isolant ou le support sur lequel il est appliqué est poreux, l'élément isolant étant collé à l'aide d'un adhésif à base d'une émulsion bitumineuse ayant un taux d'eau de maximum 35 % et contenant un bitume dont la pénétration se situe entre 20 et 300 dmm.

2. Procédé suivant la revendication 1, **caractérisé en ce que** l'adhésif utilisé comporte un agent gélifiant soluble en phase aqueuse.

3. Procédé suivant la revendication 1 ou 2, **caractérisé en ce que** l'émulsion utilisée est de type anionique.

4. Procédé suivant la revendication 1 ou 2, **caractérisé en ce que** l'émulsion utilisée est de type non ionique.

5. Procédé suivant l'une des revendications 1 à 4, **caractérisé en ce que** l'adhésif utilisé comporte en poids humide entre 40 et 70 % de bitume, entre 10 et 30 kg/tonne d'émulsifiant, entre 0 et 2 % en épaississant et entre 0 et 20 % en charge minérale.

6. Procédé suivant l'une des revendications 1 à 5, **caractérisé en ce que** l'adhésif utilisé comporte des polymères.

7. Procédé suivant l'une des revendications 1 à 6, **caractérisé en ce que** l'adhésif est appliqué par plots, l'adhésif ayant une viscosité supérieure à 400Pa.

8. Procédé suivant l'une des revendications 1 à 6, **caractérisé en ce que** l'adhésif est appliqué par traits lorsqu'il est appliqué sur un support non uniformément plat.

9. Procédé suivant la revendication 8, **caractérisé en ce que** l'adhésif possède une viscosité située entre 5 et 400 Pa.s.

10. Procédé suivant l'une des revendications 1 à 9, **caractérisé en ce que** l'adhésif appliqué est séché pendant environ 72 heures à environ 20°C pour atteindre au moins 70% de la résistance maximale d'arrachement pour ledit système d'étanchéité.

11. Usage d'un adhésif comprenant une émulsion bitumineuse dans un procédé suivant l'une des revendications 1 à 10.

## Claims

1. Method of applying an insulating element in a waterproofing system by adhesive bonding, **characterised in that** at least the insulating element or the support to which it is applied is porous, the insulating element being bonded by means of an adhesive based on a bituminous emulsion having a maximum water content of 35% and containing a bitumen whose penetration is between 20 and 300 dmm.

2. Method according to claim 1, **characterised in that** the adhesive used comprises a soluble gelling agent in the aqueous phase.

3. Method according to claim 1 or 2, **characterised in that** the emulsion used is of the anionic type.

4. Method according to claim 1 or 2, **characterised in that** the emulsion used is of the non-anionic type.

5. Method according to one of claims 1 to 4, **characterised in that** the adhesive used comprises, by wet weight, between 40% and 60% bitumen, between 10 and 30 kg/tonne of emulsifier, between 0% and 2% thickener and between 0% and 20% mineral filler.

6. Method according to one of claims 1 to 5, **characterised in that** the adhesive used comprises polymers.

7. Method according to one of claims 1 to 6, **characterised in that** the adhesive is applied in spots, the adhesive having a viscosity greater than 400 Pa.

8. Method according to one of claims 1 to 6, **characterised in that** the adhesive is applied in lines when it is applied to a support that is not uniformly flat.

9. Method according to claim 8, **characterised in that** the adhesive has a viscosity of between 5 and 400 Pa.s.

10. Method according to one of claims 1 to 9, **characterised in that** the adhesive applied is dried for approximately 72 hours at approximately 20°C in order to achieve at least 70% of the maximum tear resistance for the said waterproofing system.

11. Use of an adhesive comprising a bituminous emulsion in a method according to one of claims 1 to 10.

## Patentansprüche

1. Verfahren zum Anlegen eines Isolierelements in ein Dichtungssystem durch Kleben, **dadurch gekennzeichnet, dass** mindestens das Isolierelement oder der Träger, auf den es angelegt wird, porös ist, wobei das Isolierelement mit Hilfe eines Haftmittels auf Basis einer Bitumenemulsion mit einem maximalen Wasseranteil von 35 %, die ein Bitumen enthält, dessen Penetration zwischen 20 und 300 dmm beträgt, aufgeklebt wird.

2. Verfahren nach Anspruch 1, **dadurch gekennzeichnet, dass** das verwendete Haftmittel einen in wässerigere Phase löslichen Gelierwirkstoff umfasst.

3. Verfahren nach Anspruch 1 oder 2, **dadurch gekennzeichnet, dass** die verwendete Emulsion anionischen Typs ist.

4. Verfahren nach Anspruch 1 oder 2, **dadurch gekennzeichnet, dass** die verwendete Emulsion nicht ionischen Typs ist.

5. Verfahren nach einem der Ansprüche 1 bis 4, **dadurch gekennzeichnet, dass** das verwendete Haftmittel in Feuchtgewicht zwischen 40 und 70 % Bitumen, zwischen 10 und 30 kg/Tonne eines Emulgators, zwischen 0 und 2 % eines Verdickungsmittels und zwischen 0 und 20 % eines mineralischen Füllstoffes umfasst.

6. Verfahren nach einem der Ansprüche 1 bis 5, **dadurch gekennzeichnet, dass** das verwendete Haftmittel Polymere umfasst.

7. Verfahren nach einem der Ansprüche 1 bis 6, **dadurch gekennzeichnet, dass** das Haftmittel in Stücken aufgetragen wird, wobei das Haftmittel eine Viskosität über 400 Pa aufweist.

8. Verfahren nach einem der Ansprüche 1 bis 6, **dadurch gekennzeichnet, dass** das Haftmittel in Linien aufgetragen wird, wenn es auf einen nicht einheitlich flachen Träger aufgetragen wird.

9. Verfahren nach Anspruch 8, **dadurch gekennzeichnet, dass** das Haftmittel eine Viskosität zwischen 5 und 400 Pa.s besitzt.

10. Verfahren nach einem der Ansprüche 1 bis 9, **dadurch gekennzeichnet, dass** das aufgetragene Haftmittel ungefähr 72 Stunden bei 20 °C getrocknet wird, um mindestens 70 % des maximalen Haltevermögens für das Dichtungssystem zu erreichen.

11. Verwendung eines Haftmittels, das eine Bitumenemulsion umfasst, in einem Verfahren nach einem der Ansprüche 1 bis 10.
